# EUROPEAN PATENT SPECIFICATION

(11) **EP 3 364 018 B1**
(45) Date of publication and mention of the grant of the patent: **08.12.2021**
(21) Application number: 16855157.0
(22) Date of filing: 03.08.2016
(51) Int. Cl.: F03D 1/06, F03D 7/02, F03D 15/00

(54) **ASSEMBLY OF BLADE AND ROTOR, AND POWER GENERATION DEVICE**
ANORDNUNG AUS SCHAUFEL UND ROTOR SOWIE STROMERZEUGUNGSVORRICHTUNG
ENSEMBLE PALE ET ROTOR ET DISPOSITIF DE GÉNÉRATION D'ÉNERGIE

(30) Priority: 14.10.2015 JP 2015203059
(43) Date of publication of application: 22.08.2018
(73) Proprietor: Nabtesco Corporation, Tokyo 102-0093 (JP)
(72) Inventor: NOHARA, Osamu, Gifu 503-2121 (JP); KOMORI, Hirofumi, Gifu 503-2121 (JP); HIBINO, Hiroshi, Gifu 503-2121 (JP)
(74) Representative: Grünecker Patent- und Rechtsanwälte PartG mbB
(86) International application number: PCT/JP2016/072735
(87) International publication number: WO 2017/064903

(56) References cited:
- EP-A1- 2 253 840
- WO-A1-2009/048403
- CN-B- 103 266 988
- DE-U1-202010 009 462
- JP-A- 2005 069 073
- JP-A- 2010 151 123
- JP-A- 2011 001 941
- US-A1- 2011 018 269

## Description

### FIELD OF THE INVENTION

The present invention relates to a blade and rotor assembly connected to a power generator to give a rotational force (rotary driving force) to the power generator, and a power generating apparatus having the blade and rotor assembly.

### BACKGROUND ART

DE 20 2010 009462 U1, WO 2009/048403 A1 and CN 103 266 988 B discloses a blade and rotor assembly according to the preamble of claim 1.
As disclosed in JP2005-69073A, for example, a power generating apparatus that utilizes a fluid to rotate a power generator is known. The power generating apparatus disclosed in JP2005-69073A includes a blade that receives wind as a fluid, and a rotor that holds the blade and is connected to a power generator. The rotor is rotated when the blade receives a fluid (e.g., wind). The rotation of the rotor is given to the power generator, and the power generator generates power.

The blade is connected to the rotor through a bearing. The bearing enables relative rotation of the blade with respect to the rotor about an axis along a direction perpendicular to a rotation axis of the rotor, in other words, about an axis along a longitudinal direction of the blade. The rotation of the blade with respect to the rotor is controlled by a pitch angle rotary driving apparatus.

In the power generating apparatus disclosed in JP2005-69073A, the pitch angle rotary driving apparatus includes a body part including the motor, and an output part (output case 37) that decelerates the rotation of the motor and outputs it. In the power generating apparatus, a rotation axis of the output part of the pitch angle rotary driving apparatus is aligned with the rotation axis of the blade with respect to the rotor. The body part is fixed to the rotor through a fastening tool. On the other hand, the output case 37 serving as the output part is loosely fitted to the blade, and is further fixed to the blade by means of a fastening tool. As a result, the blade is rotated in synch with the output case 37 with respect to the rotor. According to the power generating apparatus disclosed in JP2005-69073A, a mechanism for controlling a pitch angle is simple, whereby manufacturing costs can be decreased and maintenance can be facilitated.

The fluid that rotates the rotor through the blade also acts on the blade such that the blade is inclined with respect to the rotor. When the blade receives the fluid and is inclined with respect to the rotor, a load is applied to a connection part between the rotary driving apparatus and the blade or the rotor. A reducer of the pitch angle rotary driving apparatus is a precision machine. To continuously use the pitch angle rotary driving apparatus while a load is applied to the connection part between the rotary driving apparatus and the blade or the rotor leads to unexpected damage of the reducer.

### SUMMARY OF THE INVENTION

The present invention has been made in view of the above circumstances. The object of the present invention is, in a power generating apparatus in which a rotation axis of an output part of a rotary driving apparatus which controls a pitch angle of a blade is positioned on a rotation axis of the blade with respect to a rotor, to decrease a load which is generated in a reducer when the blade receives a fluid and is inclined.

A blade and rotor assembly according to the present invention comprises:
a rotor that is connected to a power generator and transmits a rotational force to the power generator;
a blade that is supported by the rotor and rotates the rotor by a force received from a fluid;
a bearing that rotatably connects the rotor and the blade; and
a rotary driving apparatus that rotatably drives the blade to control a pitch angle;
wherein:
   the rotary driving apparatus has a motor and a reducer that decelerates rotation outputted from the motor and outputs it from an output part;
   a rotation axis of the output part of the rotary driving apparatus is positioned on a rotation axis of the blade with respect to the rotor; and
   at a connection part between the reducer and at least one of the rotor and the blade, there is formed an external force moderation mechanism (external force absorbing mechanism or external force reducing mechanism) for moderating (absorbing or reducing) an external force which is generated in the reducer through the connection part when the blade receives a fluid and is inclined, wherein in a direction parallel to the rotation axis of the blade with respect to the rotor, an end of the reducer on the blade side is located at a position closer to the rotor side than an end of the bearing on the blade side.

In the blade and rotor assembly according to the present invention, the reducer may be spline-coupled to at least one of the rotor and the blade.

In the blade and rotor assembly according to the present invention, the spline coupling part may be filled with a lubricant.

In the blade and rotor assembly according to the present invention, the reducer may have an output shaft member serving as the output part, and a case that rotatably holds the output shaft member; and the output shaft member may be spline-coupled to at least one of the rotor and the blade.

In the blade and rotor assembly according to the present invention, the reducer may have a case serving as the output part, and the case may be spline-coupled to at least one of the rotor and the blade.

In the blade and rotor assembly according to the present invention, at least a part of a connection part between the blade and the reducer, or at least a part of a connection part between the rotor and the reducer may be positioned, in a direction parallel to the rotation axis of the blade with respect to the rotor, inside both ends of a range defined by an assemblage width of the bearing. In other words, at least a part of the connection part between the reducer and the blade, or at least a part of the connection part between the reducer and the rotor may be positioned, in the direction parallel to the rotation axis of the blade with respect to the rotor, inside both ends of an area in which at least one of opposed surfaces of a pair of annular parts (a pair of ring parts) disposed oppositely to each other, with a rolling element of the bearing being interposed therebetween, are located.

Preferably, at least a part of the connection part between the reducer and the blade, or at least a part of the connection part between the reducer and the rotor may be positioned, in the direction parallel to the rotation axis of the blade with respect to the rotor, inside both ends of a range defined by an overlapped assemblage width of the bearing. In other words, at least a part of the connection part between the reducer and the blade, or at least a part of the connection part between the reducer and the rotor may be positioned, in the direction parallel to the rotation axis of the blade with respect to the rotor, inside both ends of an area in which both opposed surfaces of a pair of annular parts (a pair of ring parts) disposed oppositely to each other, with a rolling element of the bearing being interposed therebetween, are located.

In the blade and rotor assembly according to the present invention, an entire part of the connection part between the blade and the reducer, or an entire part of the connection part between the rotor and the reducer is positioned, in the direction parallel to the rotation axis of the blade with respect to the rotor, inside both the ends of the range defined by the assemblage width of the bearing. In other words, the entire part of the connection part between the reducer and the blade, or the entire part of the connection part between the reducer and the rotor may be positioned, in the direction parallel to the rotation axis of the blade with respect to the rotor, inside both ends of an area in which at least one of opposed surfaces of a pair of annular parts (a pair of ring parts) disposed oppositely to each other, with a rolling element of the bearing being interposed therebetween, are located.

Preferably, the entire part of the connection part between the reducer and the blade, or the entire part of the connection part between the reducer and the rotor may be positioned, in the direction parallel to the rotation axis of the blade with respect to the rotor, inside both ends of a range defined by an overlapped assemblage width of the bearing. In other words, the entire part of the connection part between the reducer and the blade, or the entire part of the connection part between the reducer and the rotor may be positioned, in the direction parallel to the rotation axis of the blade with respect to the rotor, inside both ends of an area in which both opposed surfaces of a pair of annular parts (a pair of ring parts) disposed oppositely to each other, with a rolling element of the bearing being interposed therebetween, are located.

In the blade and rotor assembly according to the present invention, the reducer may include a reduction part of an eccentric swing type (a reduction part of an eccentric oscillating type).

A power generating apparatus according to the present invention comprises:
any of the aforementioned blade and rotor assembly according to the present invention; and
the power generator connected to the rotor.

According to the present invention, it is possible to decrease a load which is generated in the rotary driving driving apparatus when the blade receives a fluid pressure and is inclined.

### BRIEF DESCRIPTION OF THE DRAWINGS

Fig. 1 is a perspective view showing a power generating apparatus as a windmill, for explaining an embodiment of the present invention.
Fig. 2 is a side view schematically showing a structure of the power generating apparatus of Fig. 1.
Fig. 3 is a vertical sectional view of a rotary driving apparatus.
Fig. 4 is a sectional view showing a connection part between a blade and a rotor in the power generating apparatus.
Fig. 5 is a view corresponding to Fig. 2, showing a modification example of the power generating apparatus.
Fig. 6 is a view corresponding to Fig. 2, showing another modification example of the power generating apparatus.

### DETAILED DESCRIPTION OF THE INVENTION

An embodiment of the present invention will be described herebelow with reference to the drawings. In the drawings attached to the specification, a scale size, an aspect ratio and so on are changed and exaggerated from the actual ones, for the convenience of easiness in illustration and understanding.

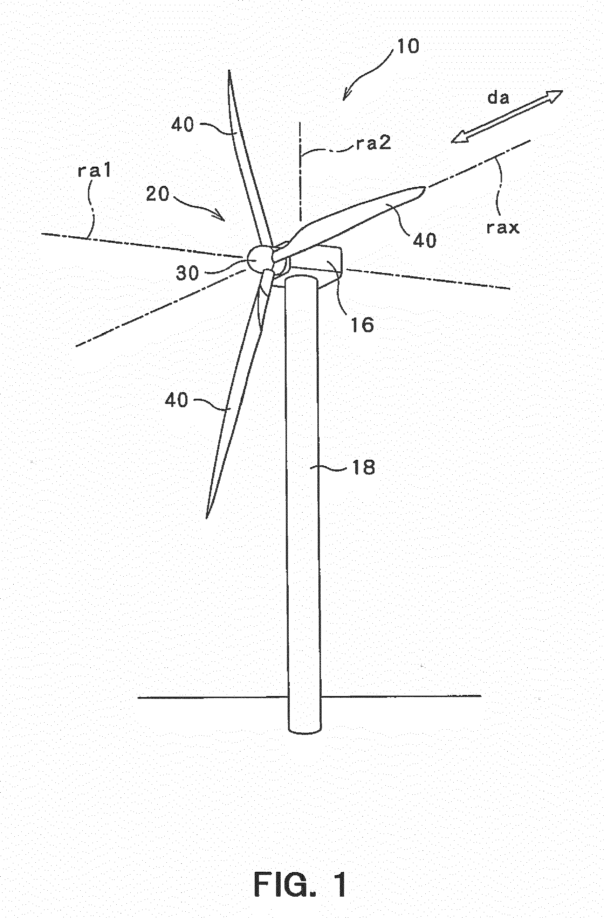

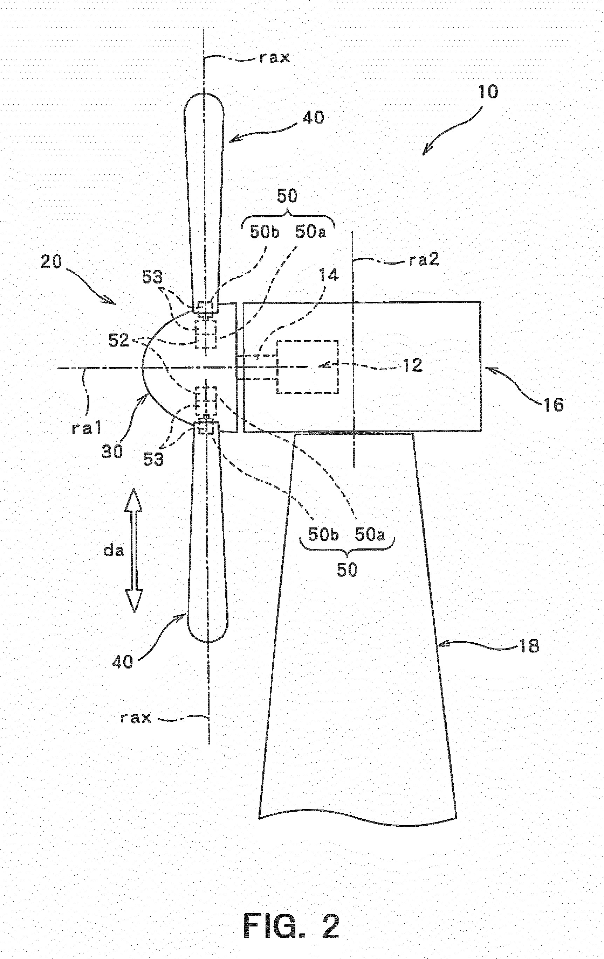

Figs. 1 to 6 are views for explaining an embodiment according to the present invention and its modification examples. As shown in Figs. 1 and 2, a power generating apparatus 10 includes an assembly (blade and rotor assembly) 20 having a rotor 30 and a blade 40, and a power generator 12 connected to the rotor 30 of the assembly 20. The blade and rotor assembly 20 is located in a fluid. In the assembly 20, the blade 40 is connected to the rotor 30, and rotates the rotor 30 by a force received from a fluid. The rotor 30 transmits a rotational force to the generator 12. Namely, in the blade and rotor assembly 20, the blade 40 receives a fluid and converts a flow of the fluid to a rotational force of the rotor 30. Then, the rotor 20 rotates the power generator 12, whereby the power generator 12 generates power.

In the embodiment described below with reference to the drawings, the blade and rotor assembly 20 and the power generating apparatus 10 constitute a wind turbine generator that generates power by a wind power, i.e., a windmill. However, the application of the assembly 20 and the power generating apparatus 10 to the wind power generation is nothing more than an example, and they can be applied to various apparatuses that generate power by utilizing a fluid flow.

An overall structure of the power generating apparatus 10 in the illustrated embodiment is firstly described. As shown in Figs. 1 and 2, in the illustrated embodiment, the power generating apparatus 10 serving as a windmill further includes a nacelle 16 accommodating the power generator 12, and a tower 18 which is a base supporting the nacelle 16. As shown in Fig. 2, the blade and rotor assembly 20 is connected to the power generator 12 fixed in the nacelle 16 through a rotation shaft member 14. The blade and rotor assembly 20 is rotatable about a rotation axis ra1 defined by a central axis of the rotation shaft member 14, with respect to the power generator 12 and the nacelle 16. The rotation axis ra1 of the blade and rotor assembly 20 with respect to the power generator 12 and the nacelle 16 is parallel to the horizontal direction, for example. The tower 18 rotatably holds the nacelle 16. A rotation axis ra2 of the nacelle 16 with respect to the tower 18 is parallel to the vertical direction, for example. The rotation of the nacelle 16 with respect to the tower 18 is driven by a driving apparatus, not shown. By rotating the nacelle 16 with respect to the tower 18 about the rotation axis ra2, an orientation of the rotation axis ra1 of the blade and rotor assembly 20 with respect to the power generator 12 and the nacelle 16 can be adjusted. Thus, by changing an orientation of the blade and rotor assembly 20 in accordance with a wind direction, a wind power can be efficiently converted to the rotation of the assembly 20, whereby a power generation efficiency of the power generating apparatus 10 can be improved.

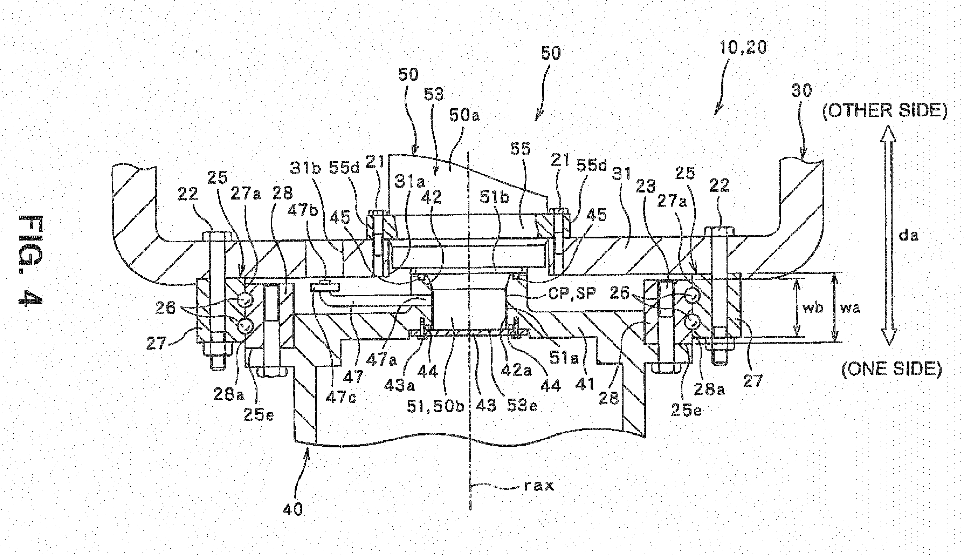

Next, the blade and rotor assembly 20 is further described in detail. As described above, the blade and rotor assembly 20 includes the rotor 30 and the blade 40. In the example shown in Fig. 1, the assembly 20 has the three blades 40. The respective blades 40 radially extend at equal angles therebetween from the rotor 30 about the rotation axis ra1 of the assembly 20. The three blades 40 are apart from each other equiangularly. As shown in Fig. 4, the blade and rotor assembly 20 further has a bearing 25 which rotatably connects the rotor 30 and the blades 40. Each blade 40 is formed to have an elongated plate-like shape. Each blade 40 is arranged such that its longitudinal direction is parallel to a direction parallel to a rotation axis rax of the blade 40 with respect to the rotor 30. By rotating the blade 40 about the rotation axis rax, the orientation of the blade 40, i.e., a pitch angle can be adjusted with respect to a flow direction of a fluid such as wind. By controlling a pitch angle depending on a fluid flow direction, an efficiency (conversion efficiency) at which the fluid flow is converted to the rotation of the assembly 20 can be adjusted.

As shown in Fig. 2, the blade and rotor assembly 20 further has a rotary driving apparatus 50 that rotatably drives the blades 40 to control a pitch angle. The rotary driving apparatus 50 has a body part 50a, and an output part 50b that relatively rotates with respect to the body part 50a. The body part 50a includes a motor 52, and a part or whole of a reducer (speed reducer) 53 that decelerates (reduces) rotation outputted from the motor 52. The output part 50b reduces the rotation of the motor 52 and outputs the rotation. As shown in Fig. 2, a rotation axis of the output part 50b of the rotary driving apparatus 50 is positioned on the rotation axis rax of the blade 40 with respect to the rotor 30. In the illustrated example, the body part 50a of the rotary driving apparatus 50 is fixed to the rotor 30, and the output part 50b of the rotary driving apparatus 50 is connected to the blade 40. Thus, when the output part 50b is rotated, the blade 40 is rotated with respect to the rotor 30 about the rotation axis rax.

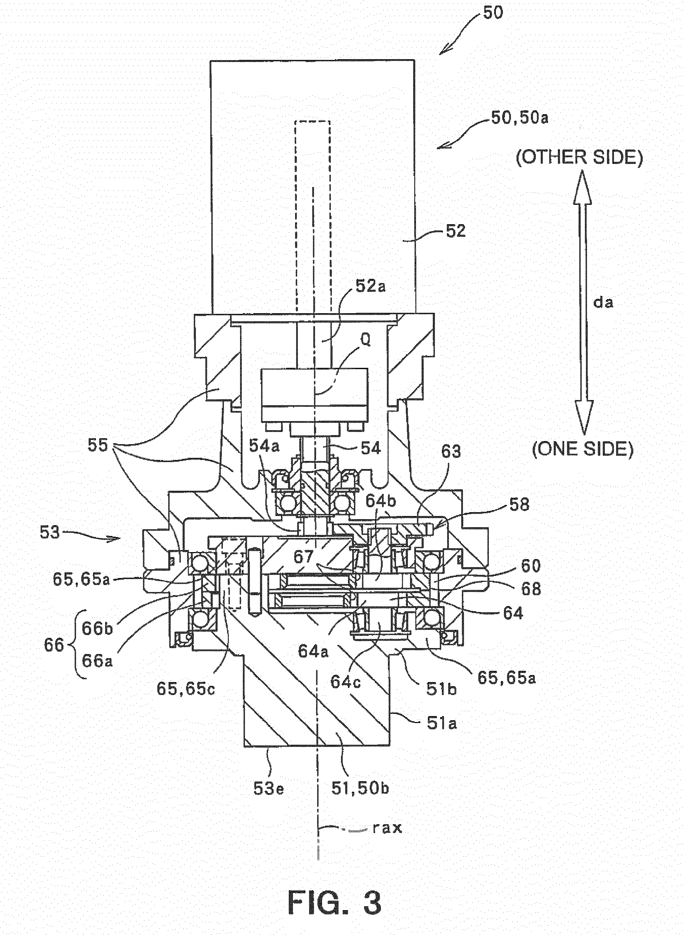

An example of the rotary driving apparatus 50 is described with reference mainly to Fig. 3. The rotary driving apparatus 50 includes the motor 52, and the reducer 53 that decelerates a rotation power outputted from the motor 52 and outputs the rotation power from the output part 50b. In the example shown in Fig. 3, the output part 50b of the reducer 53 is formed by an output shaft member 51 (see Fig. 3) serving as a part of a carrier 65 described later. In this example, the rotation power from the motor 52 of the rotary driving apparatus 50 is decelerated by the reducer 53, and is outputted from the output shaft member 51. Thus, the decelerated rotation power is transmitted from the output shaft member 51 of the rotary driving apparatus 50 to the blade 40, so that the blade 40 is rotated with respect to the rotor 30 about the rotation axis rax. As shown in Fig. 2, the output shaft member 51 of the reducer 53 is positioned on the rotation axis rax of the blade 40 with respect to the rotor 30.

As shown in Fig. 3, the motor 52 has a drive shaft member 52a that outputs a rotation power. The reducer 53 has an input shaft member 54, a case 55, a reduction part 58 including the aforementioned carrier 65, and so on. A part of the reducer 53 projects from the case 55 so as to be exposed on one side in an axial direction da, which is a lower side in a sheet plane of Fig. 3. The output part 50b is formed by the part of the reducer 53, which is exposed from the case 55 on the one side in the axial direction da. In addition, the motor 52 is connected to the case 55 from the other side in the axial direction da, which is an upper side in the sheet plane of Fig. 3. In this example, the case 55 is fixed to the motor 52.

As shown in Fig. 3, the reduction part 58 of the reducer 53 in this embodiment serves as an eccentric swing type reducer (eccentric oscillating type reducer). However, not limited to the this example, a reducer of a planetary gear type or a spur gear type may be used. In the application of the rotary driving apparatus 50 shown in Figs. 1 and 2, the one side in the axial direction da is on the side of the blade 40 along the axial direction da, and the other side in the axial direction da is on the side of the rotor 30 along the axial direction da.

The input shaft member 54 and the reduction part 58 and so on are accommodated in the case 55. The input shaft member 54 is connected to the drive shaft member 52a of the motor 52, and can be rotated in synch with the drive shaft member 52a about the rotation axis rax of the blade 40. A plurality of pin internal teeth 60 forming internal teeth are disposed on an inner circumferential surface of the case 55. Inside the case 55, the pin internal teeth 60 are arranged at equal intervals therebetween along a circumferential direction of the inner circumferential surface. The pin internal teeth 60 mesh with external teeth 68 of an external teeth gear 66 described later.

On an end of the input shaft member 54, which is positioned on the one side in the axial direction da, a gear part 54a to be meshed with a below-described crank shaft gear 63 in the reduction part 58 is provided. The input shaft member 54 transmits a rotation power outputted from the motor 52 to the reduction part 58.

The reduction part 58 includes the crank shaft gear 63, a crank shaft 64, the carrier 65, the external teeth gear 66 and so on. The crank shaft gear 63 is provided as a spur gear element. In order to mesh with the gear part 54a of the input shaft member 54, a plurality of (e.g., three) crank shaft gears 63 are disposed around the gear part 54a. The crank shaft gear 63 is fixed to the other side of the crank shaft 64 by means of spline coupling.

A plurality of (e.g., three) crank shafts 64 are disposed at equal intervals therebetween along the circumferential direction about the rotation axis rax. The crank shaft 64 is disposed such that its axial direction is parallel to the axial direction da. The crank shaft 64 is disposed to pass through a crank hole 67 formed in the external teeth gear 66. The cranks shaft 64 is rotated by a rotation power transmitted thereto from the input shaft member 54 though the crank shaft gear 63.

In the illustrated example, the crank shaft 64 has a shaft body 64c, and a first eccentric part 64a and a second eccentric part 64b which are provided on the shaft body 64c. The first eccentric part 64a and the second eccentric part 64b each have a circular section in a section perpendicular to the axial direction da. Central positions of the respective first eccentric part 64a and the second eccentric part 64b are eccentric with respect to a central axis of the shaft body 64c of the crank shaft 64. The first eccentric part 64a and the second eccentric part 64b are symmetrically eccentric to each other about the central axis of the shaft body 64c. These first eccentric part 64a and the second eccentric part 64b are positioned in the crank hole 67 of the external teeth gear 66. The crank shaft 64 is rotatably held at both ends thereof in the axial direction da, by the carriers 65.

The carrier 65 includes a base carrier 65a, an end carrier 65b, and a support column 65c. The base carrier 65a and the end carrier 65b rotatably hold ends of the crank shaft 64 respectively. On one side of the base carrier 65a in the axial direction da, the output shaft member 51 serving as the output part 50b is provided. The output shaft member 51 may be integrally formed with the base carrier 65a, or may be a separate member fixed to the base carrier 65a by means of a fastening tool such as a bolt. The support column 65c is provided as a columnar portion connecting the base carrier 65a and the end carrier 65b. A plurality of the support columns 65c are disposed along the circumferential direction about the rotation axis rax, such that their axial directions are parallel to the axial direction da. The carrier 65 is rotatably held with respect to the case 55 though a main bearing.

The external teeth gear 66 has a first external teeth gear 66a and a second external teeth gear 66b. The first external teeth gear 66a and the second external teeth gear 66b are formed to have a discoid shape. The first external teeth gear 66a and the second external teeth gear 66b each have the crank hole 67 through which the crank shaft 64 passes, and a support-column through-hole through which the support column 65c passes. The eccentric parts 64a and 64b of the crank shaft 64 are positioned in the crank holes 67 of the respective external teeth gears 66a and 66b. Thus, when the crank shaft 64 is driven in rotation by the input shat member 54 to be rotated about the central axis of the shaft body 64c, the external teeth gears 66a and 66b are eccentrically swung with respect to the carrier 65. In the illustrated example, the external teeth gears 66a and 66b are translated with respect to the carrier 65 along a circumferential trajectory about the rotation axis rax.

In addition, external teeth 68 to be meshed with the pin internal teeth 60 are provided on respective outer circumferences of the first external teeth gear 66a and the second external teeth gear 66b. The number of teeth of the external teeth 68 is less than the number of teeth of the pin internal teeth 60 by one or more. Thus, every time when the crank shaft 64 is rotated, the meshing between the external teeth 68 and the pin internal teeth 60 is shifted, so that the external teeth gear 66 (66a, 66b) is kept in the eccentric state and is swingably rotated. When the external teeth gear 66 is swingably rotated with respect to the case 55, the carrier 65 and the output shaft member 51 serving as the output part 50b are rotated in synch with the external teeth gear 66 with respect to the case 55. At this time, the crank shaft 64 revolves together with the carrier 65 about the rotation axis rax, and rotates about the central axis of the shaft body 64c with respect to the carrier 65.

In the above-described reducer 53, when a rotation power from the motor 52 is transmitted to the input shaft member 54, the crank shaft 64 is rotated. At this time, the first eccentric part 64a and the second eccentric part 64b of the crank shaft 64 are eccentrically rotated respectively. When the first eccentric part 64a and the second eccentric part 64b are eccentrically rotated, the external teeth gear 66 is eccentrically swung (eccentrically oscillated) with respect to the carrier 65. At this time, due to the difference between the number of teeth of the external teeth 68 of the external teeth gear 66 and the number of teeth of the internal teeth 60 of the case 55, the external teeth gear 66 is rotated with respect to the case 55, with the external teeth 68 being meshed with the pin internal teeth 60. As a result, the carrier 65 supporting the external teeth gear 66 through the crank shaft 64 is rotated with respect to the case 55.

Next, assemblage of the rotary driving apparatus 50 onto the blade and rotor assembly 20 is described with reference mainly to Fig. 4. Fig. 4 shows a connection part between the rotary driving apparatus 50, and the rotor 30 and the blade 40. In the example shown in Fig. 4, the rotary driving apparatus 50 has the structure shown in Fig. 3. The rotary driving apparatus 50 is fixed at its body part 50a to the rotor 30. The rotary driving apparatus 50 is connected at its output part 50b to the blade 40.

The rotor 30 has a wall part 31 at a position facing the blade 40 from the axial direction da. A support hole 31a is formed in an end wall 31 of the rotor 30. The rotary driving apparatus 50 is inserted in the support hole 31a. The power generator 12 of the rotary driving apparatus 50 is positioned in the rotor 30. On the other hand, the output shaft member 51 serving as the output part 50b of the rotary driving apparatus 50 penetrates the support hole 31a so as to be positioned outside the rotor 30. The case 55 serving as a part of the body part 50a of the rotary driving apparatus 50 has a flange 55d. By threadedly engaging a fastening tool 21 such as a bolt, which passes through the flange 55d, with the end wall 31 of the rotor 30, the case 55 of the rotary driving apparatus 50 is fixed to the end wall 31 of the rotor 30. The flange 55d is in contact with an inside surface of the end wall 31 of the rotor 30, with the rotary driving apparatus 50 being fixed to the rotor 30. Namely, the connection part of the rotary driving apparatus 50 to the rotor 30 is a contact surface between a surface of the flange 55d which faces the one side (blade side) in the axial direction da, and a surface of the end wall 31 of the rotor 30 which faces the other side (rotor side) in the axial direction da.

On the other hand, the blade 40 has an end wall 41 at a position facing the rotor 30 from the axial direction da. The end wall 41 of the blade 40 is provided with a cylindrical wall 42 formed to have a cylindrical shape. The cylindrical wall 42 extends from the end wall 41 toward the other side (rotor side) in the axial direction da. The output shaft member 51 serving as the output part 50b of the rotary driving apparatus 50 is inserted in a hollow part of the cylindrical wall 42. The output shaft member 51 and the cylindrical wall 42 are spline-coupled. Namely, the output shaft member 51 and the cylindrical part 42 transmit the rotation of the blade 40 with respect to the rotor 30 about the rotation axis rax, while enabling the relative movement of the blade 40 with respect to the rotor 30 toward the axial direction da parallel to the rotation axis rax. As a concrete structure, an outer circumferential surface 51a of the output shaft member 51 and an inner circumferential surface 42a of the cylindrical wall 42 may respectively have teeth to be meshed with each other, or one of the outer circumferential surface 51a of the output shaft member 51 and the inner circumferential surface 42a of the cylindrical wall 42 may have a key and the other may have a groove to be meshed with the key. Namely, a connection part CP at which the rotary driving apparatus 50 is connected to the blade 40 is a meshing part (connection part) between the outer circumferential surface of the output shaft member 51 and the inner circumferential surface of the cylindrical wall 42.

In the illustrated example, the connection part CP between the rotary driving apparatus 50 and the blade 40, i.e., the spline coupling part SP transmits power by meshing. Thus, the spline coupling part SP between the rotary driving apparatus 50 and the blade 40 is filled with a lubricant. In the example shown in Fig. 4, a lid member 43 is fixed to the cylindrical wall 42 by means of a fastening tool 43a. The lid member 43 closes the hollow part of the cylindrical wall 42 from the one side (blade side) in the axial direction da. An O-ring 44 is disposed between an end surface of the cylindrical wall 42 which faces the one side (blade side) in the axial direction da, and a surface of the lid member 43 which faces the other side (rotor side) in the axial direction da. The O-ring 44 is located in a groove formed in the one axial side end surface of the cylindrical wall 42. The O-ring 44 hermetically seals a gap between the cylindrical wall 42 and the lid member 43 so as to prevent leakage of the lubricant. In addition, an oil seal 45 is provided between an end surface of the cylindrical wall 42 which faces the other side (rotor side) in the axial direction da, and a base part (skirt part) 51b having a larger diameter of the output shaft member 51. The oil seal 45 is located in a groove formed in the other axial side end surface of the cylindrical wall 42. The oil seal 45 hermetically seals a gap between the cylindrical wall 42 and the output shaft member 51 of the rotary driving apparatus 50 so as to prevent leakage of the lubricant. The hollow part of the cylindrical wall 42 is hermetically sealed between the lid member 43 and the rotary driving apparatus 50 by means of the O-ring 44 and the oil seal 45. Thus, the spline coupling part SP of the rotary driving apparatus 50 and the blade 40, which is located inside the hollow part of the cylindrical wall 42, is maintained to be filled with the lubricant.

In the example shown in Fig. 4, three is a pipe-like member (tube-like member or cylindrical member) 47 communicating with the spline coupling part SP between the rotary driving apparatus 50 and the blade 40. A side surface of the cylindrical wall 42 has a through-hole passing through from an outer circumferential surface to the inner circumferential surface 42a. One end 47a of the pipe-like member 47 is inserted into the through-hole so as to be held by the cylindrical wall 42. On the other hand, the other end 47b of the pipe-like member 47 faces the other side (rotor side) in the axial direction da to be opposed to the wall part 31 of the rotor 30 from the one side (blade side) in the axial direction da. An on-off valve 47c is disposed on the other end of the pipe-like member 47 or in the vicinity of the other end thereof. The on-off valve 47c opens and closes the pipe-like member 47. The pipe-like member 47 is rotated, in synch with the blade 40, with respect to the rotor 30 about the rotation axis rax. On the other hand, a plurality of injection holes 31b are formed in the wall part 31 of the rotor 30 in circumferential positions about the rotation axis rax. Each injection hole 31b can be opposed to the other end 47b of the pipe-like member 47 from the axil direction da, in accordance with a rotation position of the blade 40 with respect to the rotor 30. An operator in the rotor 30 can replenish the spline coupling part SP with a lubricant by operating the on-off valve 47c through the injection holes 31b and injecting the lubricant into the other end 47b of the pipe-like member 47.

In addition, as described above, the rotor 30 and the blade 40 are connected by using the bearing 25. The bearing 25 is fixed to the rotor 30, and holds the blade 40 such that the blade 40 is rotatable with respect to the rotor 30 about the rotation axis rax. In the illustrated example, the bearing 25 has a first ring part 27 and a second ring part 28 that are opposed to each other, and a rolling element 26 disposed between the first ring part 27 and the second ring part 28. The first ring part 27 and the second ring part 28 are each formed to have an annular shape (ring shape). The first ring part 27 is fixed to the rotor 30 by means of a fastening tool 22. The first ring part 27 serves as an outer race. The second ring part 28 is fixed to the blade 40 by means of a fastening tool 23. The second ring part 28 serves as an inner race. The bearing 25 has a plurality of the rolling elements 26 disposed with a circumferential gap therebetween about the rotation axis rax. In the illustrated example, the rolling elements 26 are disposed along two respective circumferences that are apart from each other in the axial direction da.

The blade 40 is subjected to the action of a fluid, while it is supported by the rotor 30. Thus, in the blade and rotor assembly 20, the fluid acts on the blade 40 such that the blade 40 is inclined with respect to the rotor 30. Namely, the bearing 25 connecting the blade 40 and the rotor 30 is subjected not only to a thrust load from the blade 40, but also to a radial load therefrom. A bearing that can withstand both the thrust load and the radial load is selected as the bearing 25.

In the blade and rotor assembly 20, relative positions of the rotor 30 and the blade 40 along the axial direction da are determined by the bearing 25. Thus, as in the known technique disclosed in JP2005-69073A described in the background column, when a reducer of a pitch angle rotary driving apparatus is fixed to both a rotor and a blade by means of fastening tools, the rotary driving apparatus, in particular, the reducer of the rotary driving apparatus is subjected to an axial load, unless the bearing, the rotor, the blade and the rotary driving apparatus are manufactured with a significantly high degree of accuracy. The reducer of the pitch angle rotary driving apparatus is a precision machine. To continuously use the pitch angle rotary driving apparatus while a load is applied to the reducer leads to unexpected damage of the reducer.

On the other hand, in this embodiment, the reducer 53 of the rotary driving apparatus 50 is spline-coupled to the blade 40. Thus, the reducer 53 can be relatively moved in the axial direction da with respect to the blade 40 to which the reducer 53 is spline-coupled. Thus, in the apparatus in which the rotation axis rax of the output part 50b of the rotary driving apparatus 50 that controls a pitch angle is positioned on the rotation axis rax of the blade 40 with respect to the rotor 30, generation of an axial load on the rotary driving apparatus 50 can be effectively prevented.

In addition, the blade 40 is subjected to the action of a fluid, while it is supported by the rotor 30. In the blade and rotor assembly 20, the fluid acts on the blade 40 such that the blade 40 is inclined with respect to the rotor 30. Namely, the fluid applies an external force to the blade 40 fixed to the rotor 30 such that the blade 40 is forced to be inclined in a direction not parallel to the rotation axis rax of the blade 40 and the rotor 30. When the fluid acts on the blade 40 such that the blade 40 is inclined with respect to the rotor 30, a load is applied to the connection part CP between the rotary driving apparatus 50 and the blade 40. As the position of the connection part CP at which the rotary driving apparatus 50 is connected to the blade 40 is shifted from a center of inclination of the blade 40 with resect to the rotor 30, the load applied to the connection pat CP increases. The center of inclination of the blade 40 with respect to the rotor 30 is generally inside both ends of a range defined by an assemblage width of the bearing.

Thus, in this embodiment, at least a part of the connection part CP between the blade 40 and the reducer 53 is positioned, in the axial direction da, inside both the ends of the range defined by the assemblage width (assemblage area) of the bearing 25. Particularly in the example shown in Fig. 4, the entire part of the connection part CP between the blade 40 and the reducer 53 is positioned, in the axial direction da, inside both the ends of the range defined by the assemblage width of the bearing 25. According to such an embodiment, even when the blade 40 is inclined by the fluid with respect to the 30, the position of the connection part CP at which the rotary driving apparatus 50 is connected to the blade 40 is not displaced largely. Thus, an external force applied to the rotary driving apparatus 50, in particular, the reducer 53 of the rotary driving apparatus 50 can be effectively decreased. Namely, in the illustrated example, by adjusting the position of the connection part CP between the blade 40 and the reducer 53, the connection part CP serves as an external force moderation mechanism (external force reducing mechanism) for moderating (reducing) an external force transmitted to the reducer 53 through the connection part CP when the blade 40 receives the fluid and is inclined.

In addition, according to this embodiment, the reducer 53 of the rotary driving apparatus 50 is spline-coupled to the blade 40. Thus, as compared with a case in which the reducer 53 and the blade 40 are fixed by a fastening tool such as a bolt, a slight gap is formed in a spline coupling part SP between the reducer 53 and the blade 40. The gap obtained by the spline coupling also serves as an external force moderation mechanism (external force reducing mechanism) for moderating (reducing) an external force generated in the reducer 53 through the connection part CP when the blade 40 receives the fluid and is inclined. Thus, a load applied to the rotary driving apparatus 50 can be effectively decreased.

Herein, the "assemblage width of a bearing" means an area in which, in the direction along the rotation axis of the bearing, there is at least one of opposed surfaces of a pair of annular parts (ring parts) which are located oppositely to each other with the rolling elements of the bearing interposed therebetween. In the example shown in Fig. 4, the rolling elements 26 are disposed between the pair of ring parts 27 and 28. Thus, in the example shown in Fig. 4, an assemblage width wa of the bearing 25 means a range wa which is occupied, along the axial direction da, by at least one of an inner circumferential surface 27a of the first ring part 27, which is opposed to the second ring part 28, and an outer circumferential surface 28a of the second ring part 28, which is opposed to the first ring part 27.

In the example shown in Fig. 4, a range which is occupied, along the axial direction da, by the inner circumferential surface 27a of the first ring part 27, which is opposed to the second ring part 28, and a range which is occupied, along the axial direction da, by the outer circumferential surface 28a of the second ring part 28, which is opposed to the first ring part 27, differ from each other. In such an example, the center of inclination (inclination center) of the blade 40 with respect to the rotor 30 is likely to be positioned, along the axial direction da, inside both the ends of the range defined by the overlapped assemblage width wb of the bearing, i.e., inside both the ends of the area in which, in the axial direction da, both the opposed surfaces 27a and 28a of the pair of annular parts (ring parts) 27 and 28 are located. Thus, the structure in which at least a part of the connection part CP between the blade 40 and the reducer 53, further the entire part of the connection part CP is positioned, in the axial direction da, inside both the ends of the range defined by the overlapped assemblage width (overlapped assemblage area) wb of the bearing 25 is more effective in decreasing an external force applied to the connection part CP.

According to the above embodiment, the reducer 53 of the rotary driving apparatus 50 is spline-coupled to the blade 40. Thus, as compared with a case in which the reducer 53 and the blade 40 are fixed by a fastening tool such as a bolt, a slight gap is formed in the spline coupling part SP between the reducer 53 and the blade 40. The gap obtained by the spline coupling also serves as an external force moderation mechanism (external force reducing mechanism) for moderating (reducing) an external force generated in the reducer 53 through the connection part CP when the blade 40 receives the fluid and is inclined. Thus, the reducer 53, which could be easily damaged because of its fine structure when the blade 40 is subjected to the action of the fluid, can be effectively prevented from being damaged.

In addition, the reducer 53 can be relatively moved in the axial direction da, with respect to the blade 40 to which the reducer 53 is spline-coupled. Thus, in the apparatus in which the rotation axis rax of the output part 50b of the rotary driving apparatus 50 that controls a pitch angle is positioned on the rotation axis rax of the blade 40 with respect to the rotor 30, generation of an axial load on the rotary driving apparatus 50 can be effectively prevented. Thus, unexpected damage of the rotary driving apparatus 50 can be effectively prevented. In addition, it is not necessary to strictly manage the dimensions of the constituent elements such as the rotor 30, the blade 40, the rotary driving apparatus 50, the bearing 25 and so on. Further, a load to the bearing for rotatably holding the output part 50b of the rotary driving apparatus 50 can be effectively decreased. Thus, the bearing supporting the output part 50b can be made smaller, and consequently the smaller size of the rotary driving apparatus 50 can be achieved.

The blade and rotor assembly 20 in which the rotation axis rax of the output part 50b of the rotary driving apparatus 50 that controls a pitch angle is positioned on the rotation axis rax of the blade 40 with respect to the rotor 30 can have advantages in that manufacturing costs can be decreased by its simple structure and maintenance can be facilitated, similarly to the disclosure of JP2005-69073A described in the background art column.

In addition, according to this embodiment, at least a part of the connection part CP between the blade 40 and the reducer 53 is positioned, in the axial direction da, inside both the ends of the range defined by the assemblage width of the bearing 25. The fluid acting on the blade 40 generally acts on the blade 40 such that the blade is inclined with respect to the rotor 30 about a position inside both the ends of the range defined by the assemblage width of the bearing 25. A displacement of the blade 40 with respect to the rotor 30 is minimum at a position that is the center of inclination, and increases along the axial direction da as the position moves away from the center of inclination. Thus, since the connection part CP between the reducer 53 and the blade 40 is positioned, along the axial direction da, inside both the ends of the range defined by the assemblage width of the bearing 25, an external force applied to the connection part CP can be effectively decreased. Namely, the layout of the connection part CP between the blade 40 and the reducer 53 serves as an external force moderation mechanism (external force reducing mechanism) for moderating (reducing) an external force generated in the reducer 53 through the connection part CP when the blade 40 receives the fluid and is inclined. Thus, the bearing 25 supporting the output part 50b of the rotary driving apparatus 50 can be made smaller, and consequently the smaller size of the rotary driving apparatus 50 can be achieved.

Particularly according to this embodiment, the entire part of the connection part between the blade 40 and the reducer 53 is positioned, in the axial direction da, inside both the ends of the range defined by the assemblage width of the bearing 25. Thus, since the entire part of the connection part is positioned inside both the ends of the area defined by the assemblage width of the bearing 25, an external force applied to the connection part CP can be more effectively decreased. Thus, the bearing supporting the output part 50b of the rotary driving apparatus 50 can be made further smaller, and consequently the further smaller size of the rotary driving apparatus 50 can be achieved.

Further, according to this embodiment, the spline coupling part SP is filled with a lubricant. Thus, damage of the spline coupling part SP can be prevented.

Further, according to this embodiment, the output shaft member 51 is spline-coupled to the blade 40. Thus, since the diameter of the spline coupling part SP can be made smaller, maintenance costs can be decreased and also time and effort required for maintenance can be saved.

Further, according to this embodiment, the reducer 53 includes the reduction part of an eccentric swing type. Thus, by lessening a backlash of the reducer 53, a highly accurate operation can be realized. In addition, a large reduction ratio can be ensured by the small reducer 53.

Furthermore, according to this embodiment, as shown in Fig. 4, in the axial direction da, an end 53e of the reducer 53 on the blade side (one side) is located at a position closer to the rotor side (other side) than an end 25e of the bearing 25 on the blade side (one side). A maintenance operation of the rotary driving apparatus 50 is generally performed from the side of the rotor 30. Typically, an operator in the rotor 30 performs the maintenance of the rotary driving apparatus 50. Thus, the maintenance operation of the rotary driving apparatus 50 can be facilitated.

The above-described embodiment can be variously modified. Herebelow, modification examples are described with reference to the drawings. In the below description and the drawings used in the description, an element that can be similarly made as in the aforementioned embodiment is shown by the same symbol as the symbol used to the corresponding element in the aforementioned embodiment.

In the above-described embodiment, the spline coupling of the reducer 53 and the blade 40 can effectively prevent generation of an axial load on the rotary driving apparatus 50, and can further function as an external force moderation mechanism (external force reducing mechanism) for moderating (reducing) an external force generated in the reducer 53 through the connection part CP when the blade 40 receives the fluid and is inclined. However, not limited to this example, the reducer 53 may be spline-coupled to the rotor 30, or the reducer 53 may be spline-coupled to both the rotor 30 and the blade 40. By spline-coupling the reducer 53 to at least one of the rotor 30 and the blade 40, generation of an axial load on the rotary driving apparatus 50, in particular, the reducer 53 of the rotary driving apparatus 50 can be effectively prevented. In addition, by spline-coupling the reducer 53 to at least one of the rotor 30 and the blade 40, a gap is formed in the spline coupling part SP, whereby when the fluid acts on the blade 40 such that the blade 40 is inclined with respect to the rotor 30, a load applied to the rotary driving apparatus 50 can be effectively decreased. Namely, the spline coupling functions as an external force moderation mechanism (external force reducing mechanism). For example, in the example shown in Fig. 4, the case 55 of the rotary driving apparatus 50 may be fixed to the wall part 31 of the rotor 30 not by the fastening tool 21, but by spline coupling.

In addition, in the above-described embodiment, since at least a part of the connection part CP between the blade 40 and the reducer 53 is positioned, in the axial direction da, inside both the ends of the range defined by the assemblage width wa (or overlapped assemblage width wb) of the bearing 25, when the fluid acts on the blade 40 such that the blade 40 is inclined with respect to the rotor 30, a load applied to the rotary driving apparatus 50 can be effectively decreased. However, not limited to this example, at least a part of the connection part CP between the rotor 30 and the reducer 53 may be positioned, in the axial direction da, inside both the ends of the range defined by the assemblage width wa (or overlapped assemblage width wb) of the bearing 25. Also according to such an example, when the fluid acts on the blade 40 such that the blade 40 is inclined with respect to the rotor 30, a load applied to the rotary driving apparatus 50 can be effectively decreased.

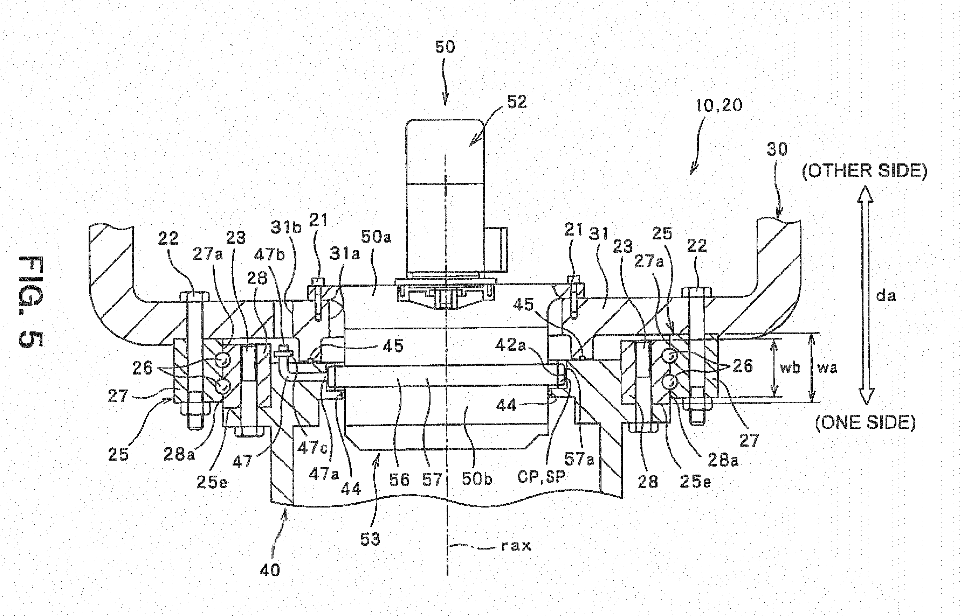

In addition, in the above-described embodiment, the structure of the rotary driving apparatus 50 is described with reference mainly to Fig. 3. However, the structure disclosed in Fig. 3 is a mere example of the rotary driving apparatus 50, and rotary driving apparatuses having various structures can be used. For example, as shown in Fig. 5, the reducer 53 may have a case 56 serving as the output part 50b. In this example, the body part 50a is formed of the motor 52 and a part of the reducer 53, and the output part 50b is formed of a part of the reducer 53. In the example shown in Fig. 5, the case 56 serving as the output part 50b is spline-coupled to the blade 40. The case 56 has a flange part 57 of a larger diameter. An outer circumferential surface 57a of the flange part 57 is provided with teeth. The teeth of the outer circumferential surface 57a of the flange part 57 mesh with the teeth formed on the inner circumferential surface 42a of the through-hole of the blade 40, whereby rotation power is transmitted between the case 56 serving as the output part 50b of the rotary driving apparatus 50 and the blade 40. According to such a modification example, since the diameter of the spline coupling part SP is larger, a load applied to the spline coupling part SP can be dispersed to decrease a contact pressure of the spline coupling part SP. Thus, durability of the blade and the rotor assembly 20 as well as the power generating apparatus 10 can be enhanced.

The rotary driving apparatus 50 in which the case 55 serves as the output part 50b can employ the pitch angle rotary driving apparatus disclosed in JP2005-69073A described in the background art column.

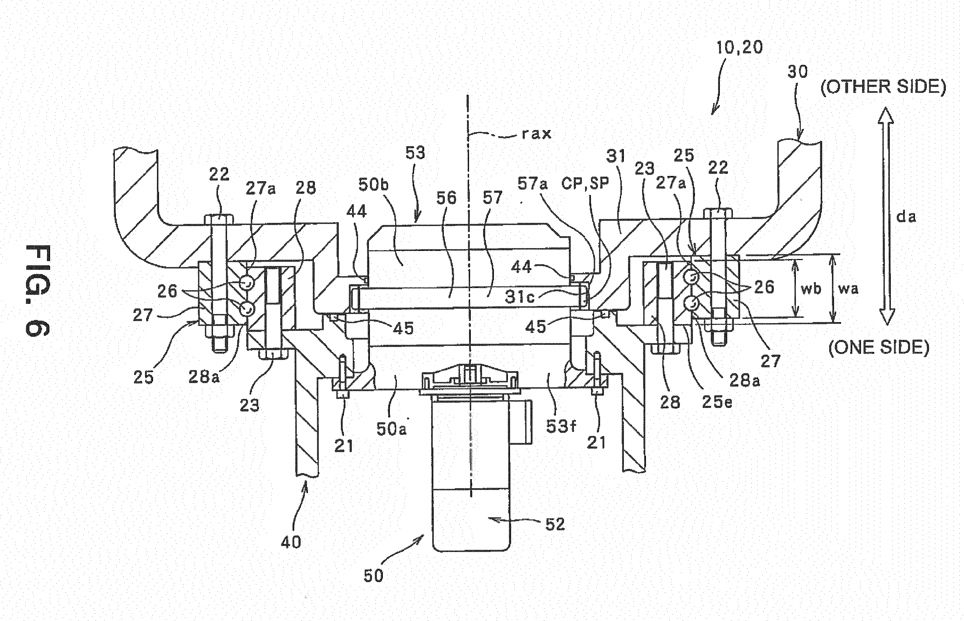

Further, in the above-described embodiment, the motor 52 of the rotary driving apparatus 50 is located on the side of the rotor 30 in the axial direction da, and the output part 50b of the rotary driving apparatus 50 is located on the side of the blade 40 in the axial direction da. However, the present invention is not limited to this example. In addition, although the rotary driving apparatus 50 is mainly disposed in the rotor 30, the present invention is not limited to this example. For example, in the example shown in Fig. 6, the motor 52 of the rotary driving apparatus 50 may be located on the side of the blade 40 (one side) in the axial direction da, and the output part 50b of the rotary driving apparatus 50 may be located on the side of the rotor 30 (other side) in the axial direction da. In addition, in the example shown in Fig. 6, the rotary driving apparatus 50 is mainly disposed in the blade 40. In the example shown in Fig. 6, the rotary driving apparatus 50 may have a structure similar to that of the example shown in Fig. 5.

In the example shown in Fig. 6, the reducer 53 is fixed, at a proximal end 53f thereof, to the blade 40 by using a fastening tool 21. On the other hand, the reducer 53 is spline-connected, at the cover 56, to the rotor 30. Specifically, the teeth formed on the outer circumferential surface 57a of the case 56 mesh with the teeth formed on the inner circumferential surface 31c of the through-hole of the rotor 30, whereby rotation power is transmitted between the case 56 serving as the output pat 50b of the rotary driving apparatus 50 and the blade 40.

In the example shown in Fig. 6, by spline-coupling the reducer 53 to the blade 40, generation of an axial load to the rotary driving apparatus 50, in particular, the reducer 53 can be effectively prevented. In addition, since the spline coupling part SP having a gap functions as an external force moderation mechanism (external force reducing mechanism), when the fluid acts on the blade 40 such that the blade 40 is inclined with respect to the rotor 30, a load applied to the rotary driving apparatus 50 can be effectively decreased. In addition, in the example shown in Fig. 6, at least a part of a connection part CP between the rotor 30 and the reducer 53 is positioned, in the axial direction da, inside both the ends of the range defined by the assemblage width (or overlapped assemblage width wb) of the bearing 25. As a result, when the fluid acts on the blade 40 such that the blade 40 is inclined with respect to the rotor 30, a load applied to the rotary driving apparatus 50 can be effectively decreased.

Further, in the above-described embodiment, the first ring part 27 serving as an outer race of the bearing 25 is fixed to the rotor 30 by means of the fastening tool 22, and the second ring part 28 serving as an inner race of the bearing 25 is fixed to the blade 40 by means of the fastening tool 23. However, not limited to this example, the first ring part 27 disposed oppositely to the second ring part 28 may be formed integrally with the rotor 30, for example. In addition, the second ring part 28 disposed oppositely to the first ring part 27 may be formed integrally with the blade 40. Also in this example, the assemblage width of the bearing and the overlapped assemblage width of the bearing are determined as described above.

Furthermore, in the above-described embodiment and its modification examples, an external force moderation mechanism (external force reducing mechanism) is described by taking the concrete examples. However, the above-described structure is a mere example of the external force moderation mechanism (external force reducing mechanism), and the external force moderation mechanism may be made by a buffer member such as a rubber and/or spring. Alternatively, an external force absorption mechanism and an oscillation absorption mechanism used in various fields may be used.

Although some modification examples of the above-described embodiment have been described above, the modification examples can be naturally combined suitably.

## Claims

1. A blade and rotor assembly (20) comprising:
a rotor (30) that is connectable to a power generator (12) and is capable of transmitting a rotational force to the power generator (12);
a blade (40) that is supported by the rotor (30) and rotates the rotor (30) by a force received from a fluid;
a bearing (25) that rotatably connects the rotor (30) and the blade (40); and
a rotary driving apparatus (50) that rotatably drives the blade (40) to control a pitch angle;
wherein:
the rotary driving apparatus (50) has a motor (52) and a reducer (53) that decelerates rotation outputted from the motor (52) and outputs it from an output part (50b);
a rotation axis of the output part (50b) of the rotary driving apparatus (50) is positioned on a rotation axis (rax) of the blade (40) with respect to the rotor (30); and
at a connection part (CP) between the reducer (53) and at least one of the rotor (30) and the blade (40), there is formed an external force moderation mechanism for moderating an external force which is generated in the reducer (53) through the connection part (CP) when the blade (40) receives a fluid and is inclined,
**characterized in that**
in a direction parallel to the rotation axis (rax) of the blade (40) with respect to the rotor (30), an end (53e) of the reducer (53) on the blade side is located at a position closer to the rotor side than an end (25e) of the bearing (25) on the blade side.

2. The blade and rotor assembly (20) according to claim 1, wherein the reducer (53) is spline-coupled to at least one of the rotor (30) and the blade (40).

3. The blade and rotor assembly (20) according to claim 2, wherein the spline coupling part is filled with a lubricant.

4. The blade and rotor assembly (20) according to claim 2 or 3, wherein:
the reducer (53) has an output shaft member (51) serving as the output part (50b), and a case (55) that rotatably holds the output shaft member (51); and
the output shaft member (51) is spline-coupled to at least one of the rotor (30) and the blade (40).

5. The blade and rotor assembly (20) according to any one of claims 2 to 4, wherein:
the reducer (53) has a case (55) serving as the output part (50b); and
the case (55) is spline-coupled to at least one of the rotor (30) and the blade (40).

6. The blade and rotor assembly according to any one of claims 1 to 5, wherein
at least a part of a connection part between the blade and the reducer, or at least a part of a connection part between the rotor and the reducer is positioned, in a direction parallel to the rotation axis of the blade with respect to the rotor, inside both ends of a range defined by an assemblage width of the bearing.

7. The blade and rotor assembly (20) according to any one of claims 1 to 5, wherein
an entire part of the connection part (CP) between the blade (40) and the reducer (53), or an entire part of the connection part (CP) between the rotor (30) and the reducer (53) is positioned, in a direction parallel to the rotation axis (rax) of the blade (40) with respect to the rotor (30), inside both the ends of a range defined by an assemblage width (wa) of the bearing (25).

8. The blade and rotor assembly (20) according to any one of claims 1 to 6, wherein
the reducer (53) includes a reduction part (58) of an eccentric swing type.

9. A power generating apparatus comprising:
the blade (40) and rotor assembly (20) according to any one of claims 1 to 8; and
the power generator (12) connected to the rotor (30).

## Patentansprüche

1. Blatt-und-Rotor-Anordnung (20), die umfasst:
einen Rotor (30), der mit einer Stromerzeugungseinrichtung (12) verbunden werden kann und in der Lage ist, eine Rotationskraft zu der Stromerzeugungseinrichtung (12) zu übertragen;
ein Blatt (40), das von dem Rotor (30) getragen wird und den Rotor (30) mittels einer von einem Fluid empfangenen Kraft in Drehung versetzt;
ein Lager (25), das den Rotor (30) und das Blatt (40) drehbar verbindet; sowie
eine Drehantriebsvorrichtung (50), die den Flügel (40) drehbar antreibt, um einen Anstellwinkel zu steuern;
wobei:
die Drehantriebsvorrichtung (50) einen Motor (52) und ein Untersetzungsgetriebe (53) aufweist, das von dem Motor (52) ausgegebene Drehung verlangsamt und sie über einen Ausgangsteil (50b) ausgibt;
eine Drehachse des Ausgangsteils (50b) der Drehantriebsvorrichtung (50) auf einer Drehachse (rax) des Blattes (40) in Bezug auf den Rotor (30) positioniert ist; und
an einem Verbindungsteil (CP) zwischen dem Untersetzungsgetriebe (53) und dem Rotor (30) oder/und dem Blatt (40) ein Mechanismus für Dämpfung einer externen Kraft ausgebildet ist, mit dem eine externe Kraft gedämpft wird, die in dem Untersetzungsgetriebe (53) über das Verbindungsteil (CP) erzeugt wird, wenn das Blatt (40) ein Fluid empfängt und geneigt ist,
**dadurch gekennzeichnet, dass**
in einer Richtung parallel zu der Drehachse (rax) des Blattes (40) in Bezug auf den Rotor (30) sich ein Ende (53e) des Untersetzungsgetriebes (53) an der Blatt-Seite an einer Position befindet, die näher an der Rotor-Seite liegt als ein Ende (25e) des Lagers (25) an der Blatt-Seite.

2. Blatt-und-Rotor-Anordnung (20) nach Anspruch 1, wobei
das Untersetzungsgetriebe (53) mittels Keilprofil mit dem Rotor (30) oder/und dem Blatt (40) gekoppelt ist.

3. Blatt-und-Rotor-Anordnung (20) nach Anspruch 2, wobei
das Keilprofil-Kopplungsteil mit einem Schmiermittel gefüllt ist.

4. Blatt-und-Rotor-Anordnung (20) nach Anspruch 2 oder 3, wobei:
das Untersetzungsgetriebe (53) ein Ausgangswellen-Element (51), das als das Ausgangsteil (50b) dient, sowie ein Gehäuse (55) aufweist, das das Ausgangswellen-Element (51) drehbar hält; und
das Ausgangswellen-Element (51) mittels Keilprofil mit dem Rotor (30) oder/und dem Blatt (40) gekoppelt ist.

5. Blatt-und-Rotor-Anordnung (20) nach einem der Ansprüche 2 bis 4, wobei:
das Untersetzungsgetriebe (53) ein Gehäuse (55) aufweist, das als das Ausgangsteil (50b) dient, und
das Gehäuse (55) mittels Keilprofil mit dem Rotor (30) oder/und dem Blatt (40) gekoppelt ist.

6. Blatt-und-Rotor-Anordnung nach einem der Ansprüche 1 bis 5, wobei
wenigstens ein Teil eines Verbindungsteils zwischen dem Blatt und dem Untersetzungsgetriebe oder wenigstens ein Teil eines Verbindungsteils zwischen dem Rotor und dem Untersetzungsgetriebe in einer Richtung parallel zu der Drehachse des Blattes in Bezug auf den Rotor innerhalb beider Enden eines Bereiches positioniert ist, der durch eine Montagebreite des Lagers bestimmt wird.

7. Blatt-und-Rotor-Anordnung (20) nach einem der Ansprüche 1 bis 5, wobei
eine Gesamtheit des Verbindungsteils (CP) zwischen dem Blatt (40) und dem Untersetzungsgetriebe (53) oder eine Gesamtheit des Verbindungsteils (CP) zwischen dem Rotor (53) und dem Untersetzungsgetriebe (30) in einer Richtung parallel zu der Drehachse (rax) des Blattes (40) in Bezug auf den Rotor (30) innerhalb beider der Enden eines Bereiches positioniert ist, der durch eine Montagebreite (wa) des Lagers (25) bestimmt wird.

8. Blatt-und-Rotor-Anordnung (20) nach einem der Ansprüche 1 bis 6, wobei
das Untersetzungsgetriebe (53) ein Untersetzungsteil (58) vom Typ Exzenterschwinge einschließt.

9. Energieerzeugungsvorrichtung, die umfasst:
die Anordnung (20) aus Blatt (40) und Rotor nach einem der Ansprüche 1 bis 8, sowie
die Stromerzeugungseinrichtung (12), die mit dem Rotor (30) verbunden ist.

## Revendications

1. Ensemble pale et rotor (20) comprenant :
un rotor (30) qui peut être connecté à un générateur d'énergie (12) et est capable de transmettre une force de rotation au générateur d'énergie (12) ;
une pale (40) qui est supportée par le rotor (30) et fait tourner le rotor (30) par une force reçue d'un fluide ;
un palier (25) qui connecte de manière rotative le rotor (30) et la pale (40) ; et
un appareil d'entraînement rotatif (50) qui entraîne en rotation la pale (40) pour commander un angle de tangage ;
dans lequel :
l'appareil d'entraînement rotatif (50) a un moteur (52) et un réducteur (53) qui décélère une rotation délivrée en sortie par le moteur (52) et la délivre en sortie depuis une partie de sortie (50b) ;
un axe de rotation de la partie de sortie (50b) de l'appareil d'entraînement rotatif (50) est positionné sur un axe de rotation (rax) de la pale (40) par rapport au rotor (30) ; et
au niveau d'une partie de connexion (CP) entre le réducteur (53) et au moins l'un du rotor (30) et de la pale (40), est formé un mécanisme de modération de force externe pour modérer une force externe qui est générée dans le réducteur (53) à travers la partie de connexion (CP) lorsque la pale (40) reçoit un fluide et est inclinée,
**caractérisé en ce que**
dans une direction parallèle à l'axe de rotation (rax) de la pale (40) par rapport au rotor (30), une extrémité (53e) du réducteur (53) sur le côté pale est située à une position plus proche du côté rotor qu'une extrémité (25e) du palier (25) sur le côté pale.

2. Ensemble pale et rotor (20) selon la revendication 1, dans lequel le réducteur (53) est couplé par cannelures à au moins l'un du rotor (30) et de la pale (40).

3. Ensemble pale et rotor (20) selon la revendication 2, dans lequel la partie de couplage à cannelures est remplie d'un lubrifiant.

4. Ensemble pale et rotor (20) selon la revendication 2 ou 3, dans lequel :
le réducteur (53) a un élément d'arbre de sortie (51) servant de partie de sortie (50b), et un carter (55) qui maintient de manière rotative l'élément d'arbre de sortie (51) ; et
l'élément d'arbre de sortie (51) est couplé par cannelures à au moins l'un du rotor (30) et de la pale (40).

5. Ensemble pale et rotor (20) selon l'une quelconque des revendications 2 à 4, dans lequel :
le réducteur (53) a un carter (55) servant de partie de sortie (50b) ; et
le carter (55) est couplé par cannelures à au moins l'un du rotor (30) et de la pale (40).

6. Ensemble pale et rotor selon l'une quelconque des revendications 1 à 5, dans lequel au moins une partie d'une partie de liaison entre la pale et le réducteur, ou au moins une partie d'une partie de connexion entre le rotor et le réducteur est positionnée, dans une direction parallèle à l'axe de rotation de la pale par rapport au rotor, à l'intérieur des deux extrémités d'une plage définie par une largeur d'assemblage du palier.

7. Ensemble pale et rotor (20) selon l'une quelconque des revendications 1 à 5, dans lequel
une partie entière de la partie de connexion (CP) entre la pale (40) et le réducteur (53), ou une partie entière de la partie de connexion (CP) entre le rotor (30) et le réducteur (53) est positionnée, dans une direction parallèle à l'axe de rotation (rax) de la pale (40) par rapport au rotor (30), à l'intérieur des deux extrémités d'une plage définie par une largeur d'assemblage (wa) du palier (25).

8. Ensemble pale et rotor (20) selon l'une quelconque des revendications 1 à 6, dans lequel
le réducteur (53) comprend une partie de réduction (58) de type à oscillation excentrique.

9. Appareil de production d'énergie comprenant :
l'ensemble (20) pale (40) et rotor selon l'une quelconque des revendications 1 à 8 ; et
le générateur d'énergie (12) connecté au rotor (30).
